# EUROPÄISCHE PATENTSCHRIFT

(11) **EP 3 040 300 B1**
(45) Veröffentlichungstag und Bekanntmachung des Hinweises auf die Patenterteilung: **13.06.2018**
(21) Anmeldenummer: 15199887.9
(22) Anmeldetag: 14.12.2015
(51) Int. Cl.: B65H 75/14, B65H 75/18, B65H 75/22, B65H 75/30, A22C 11/12

(54) **CLIPSPULE**
CLIP COIL
BOBINE A CLIP

(30) Priorität: 22.12.2014 DE 202014010142 U
(43) Veröffentlichungstag der Anmeldung: 06.07.2016
(73) Patentinhaber: Poly-clip System GmbH & Co. KG, 65795 Hattersheim (DE)
(72) Erfinder: Hein, Klaus, 63688 Gedern (DE); Meyrahn, Dr. Joachim, 64390 Erzhausen (DE)
(74) Vertreter: Eisenführ Speiser

(56) Entgegenhaltungen:
- EP-A1- 1 987 721
- DE-A1- 3 810 967
- DE-A1- 4 236 486
- DE-U1- 20 118 783
- DE-U1-202008 005 926
- US-A- 4 406 422

## Beschreibung

Die vorliegende Erfindung betrifft eine Spule zum Speichern und Abgeben eines auf der Spule aufgewickelten Wickelgutes gemäß dem Oberbegriff des Anspruchs 1.

Insbesondere betrifft die Erfindung eine Spule zum Speichern und Abgeben eines auf der Spule aufgewickelten Wickelgutes, insbesondere eines Clipstrangs, wobei die Spule eine Nabe mit einer Nabenachse und jeweils an den axialen Stirnenden der Nabe angeordnete Seitenwände aufweist, die über die Außenumfangsoberfläche der Nabe in zumindest annähernd radialer Richtung überstehen. Dabei dient der von den zueinander weisenden Flächen der Seitenwände und der Außenumfangsoberfläche der Nabe definierte und um die Nabe umlaufende Speicherraum zur Aufnahme des Wickelgutes, wobei die Nabe zumindest abschnittsweise doppelwandig ausgestaltet ist, mit einer ersten Nabenwand und mit einer zur ersten Nabenwand radial beabstandeten zweiten Nabenwand.

In der Praxis ist es bekannt, dass beispielsweise bei der Herstellung von Wurstprodukten das Wurstbrät von einer Füllmaschine über ein Füllrohr einer Clipmaschine zugeführt wird. In der Clipmaschine wird das Füllgut in ein durch einen ersten Clip einseitig verschlossenes, schlauchförmiges Verpackungshüllenmaterial abgefüllt und das schlauchförmige Verpackungshüllenmaterial durch Setzen eines zweiten Clips verschlossen. Die Verschließwerkzeuge umfassen dabei paarweise jeweils einen Stempel und eine Matrize, zwischen welchen der Clip während des Verschließens bis zum Erreichen des minimalen Abstandes der Verschließwerkzeuge umgeformt wird. Nach dem Verschließen werden die Verschließwerkzeuge in ihrer Ausgangs- oder Öffnungsstellung zurückbewegt. Anschließend wird das Verpackungshüllenmaterial des so entstandenen Wurstprodukts von dem Vorrat des übrigen Verpackungshüllenmaterials abgetrennt und das so fertiggestellte Wurstprodukt aus der Clipmaschine ausgetragen.

Die dabei verwendeten Clips werden entweder als Stangenclips bzw. S-Clips, bei denen annähernd U-förmige Clips mit ihren Seitenflächen aneinanderliegend in Stangenform angeordnet sind, oder als Rollenclips bzw. R-Clips, bei denen U-förmige Clips in Wellenform hintereinander angeordnet einen Clipstrang bilden, der auf eine Spule aufgewickelt ist, bereitgehalten. Ebenfalls bekannt ist, S-Clips lediglich im Bereich des Clipbodens so miteinander zu verbinden, dass diese auf Rollen speicherbar sind.

Da Verschlussclips vorwiegend aus Metall gefertigt sind, muss eine gefüllte Spule, und im Besonderen die Nabe, in der Lage sein, das hohe Gewicht des darauf gespeicherten Clipstrangs sicher zu tragen, ohne hierdurch beim Transport oder bei der Verwendung auf einer Clipmaschine beschädigt zu werden. Zudem sind solche Spulen häufig zum Mehrfachgebrauch bestimmt, müssen also mehrmaliges Bestücken, Transportieren und Verwenden ertragen können.

Eine Rolle oder Spule zum Speichen von Clips ist aus dem DE-Gebrauchsmuster 20 2011 107 493 bekannt, die eine Nabe mit an den Stirnenden der Nabe angeordneten Seitenwänden aufweist. Zum Sichern des Clipstranganfangs ist an der Spulennabe eine Halteeinrichtung angeordnet.

Aus der DE-Offenlegungsschrift 10 2005 033 437 ist ebenfalls eine relativ einfach aufgebaute Spule zum Speichern und Abgeben eines Clipstrangs bekannt. Die Spule ist zur Identifizierung des Speicherguts an einer ihrer Seitenwände mit einem maschinenlesbaren Etikett versehen.

Diese bekannten Spulen weisen einen einfachen Aufbau, im Besonderen eine einfache Nabe auf, bei der aber die Gefahr der Beschädigung bestehen kann.

Das EP-Patent 1 987 721 schlägt eine Clipspule vor, die eine doppelwandige Nabe besitzt, welche aus der einfachen Nabenwand und hierauf aufgesetzten teilkreisförmigen Schalen gebildet wird, und bei der zwischen den Nabenwandungen ein Transponder untergebracht wird.

Das FR-Patent 2 777 630 offenbart eine Wickelhülse, die eine relativ große axiale Länge aufweisen kann. Zur Erhöhung der Steifigkeit der Wickelhülse werden dort Halbschalen um die Wickelhülse angebracht, die sich mit radial verlaufenden Stegen auf der Wickelhülse abstützen. Das DE 20 2008 005 926 U1 Gebrauchsmuster offenbart eine Spule mit einem aus zwei gegenläufig konischen, zur Teilungsebene zusammenlaufenden Kernabschnitten gebildeten Kern sowie Flanschscheiben an den Enden des Kerns.

Die aus dem Stand der Technik bekannte Doppelwandigkeit kann die Steifigkeit der Nabe bzw. der Wickelhülse erhöhen, und so die Gefahr der Beschädigung reduzieren. Jedoch ist ein solcher Aufbau kompliziert und somit fertigungstechnisch sowie wirtschaftlich aufwendig.

Ausgehend davon ist es Aufgabe der vorliegenden Erfindung, eine Spule bereit zu stellen, welche die vorgenannten Nachteile überwindet. Es ist weiterhin Aufgabe der vorliegenden Erfindung, eine Spule bereit zu stellen, die bei verringertem Produktionsaufwand die Gefahr der Beschädigung der Spule verringert.

Die vorstehende Aufgabe wird durch die Merkmale des Anspruchs 1 gelöst. In den sich daran anschließenden Ansprüchen 2 bis 13 finden sich vorteilhafte Ausgestaltungen der erfindungsgemäßen Spule.

Insbesondere wird eine Spule zum Speichern und Abgeben eines auf der Spule aufgewickelten Wickelgutes, insbesondere eines Clipstrangs, vorgeschlagen, wobei die Spule eine Nabe mit einer Nabenachse und jeweils an den axialen Stirnenden der Nabe angeordnete Seitenwände aufweist, die über die Außenumfangsoberfläche der Nabe in zumindest annähernd radialer Richtung überstehen, wobei der von den zueinander weisenden Flächen der Seitenwände und der Außenumfangsoberfläche der Nabe definierte und um die Nabe umlaufende Speicherraum zur Aufnahme des Wickelgutes dient. Die Nabe der erfindungsgemäßen Spule ist zumindest abschnittsweise doppelwandig ausgestaltet, mit einer ersten Nabenwand, und mit einer zur ersten Nabenwand radial beabstandeten zweiten Nabenwand. Erfindungsgemäß ist weiterhin vorgesehen, dass die Spule aus zwei Spulenhälften gebildet ist, die identisch gestaltet sind.

Die erfindungsgemäße Ausgestaltung der Spule als zwei identische Spulenhälften verringert den Produktionsaufwand, bspw. durch eine verringerte Anzahl an Spritzformen, und ermöglicht so eine wirtschaftlichere Herstellung der Spulen. Zudem wird durch die zumindest abschnittsweise doppelwandige Ausgestaltung der Naben die Stabilität der Spule verbessert, und so die Gefahr der Beschädigung verringert.

Die erfindungsgemäße Spule besteht aus zwei bezüglich einer Teilungsebene der Spule identischen Spulenhälften, in der die Spulenhälften zur Bildung der Spule miteinander verbindbar sind. Die Teilungsebene muss also lediglich so durch die Spule gelegt werden, dass hieraus zwei identische Spulenhälften entstehen. In einer bevorzugten Ausführung ist die Teilungsebene senkrecht zur Nabenachse ausgerichtet. Sie verläuft also mittig zwischen den Seitenwänden der Spule. Alternativ kann ebenfalls vorgesehen sein, dass die beiden Spulenhälften zur Bildung der Spule, in einer Teilungsebene miteinander verbindbar sind, die durch die Nabenachse verläuft. Die Nabenhälften, und damit die Spulenhälften, wären bei dieser Ausführung annähernd halbkreisförmig.

Um die Stabilität im Besonderen der Nabe zu verbessern, genügt es bereits, wenn jede der Spulenhälften wenigstens einen sich in axialer Richtung erstreckenden Nabenabschnitt aufweist, der zumindest abschnittsweise doppelwandig ausgestaltet ist. Selbstverständlich kann auch der gesamte Nabenabschnitt jeder der Spulenhälften doppelwandig ausgestaltet sein. Ebenso besteht die Möglichkeit, dass die Spule nur abschnittsweise doppelwandig ausgestaltet ist, d.h. also, dass, in Umfangsrichtung betrachtet, einem doppelwandigen Abschnitt ein nicht doppelwandiger Abschnitt folgt.

In der erfindungsgemäßen Spule ist vorgesehen, dass der wenigstens eine Nabenabschnitt einer Spulenhälfte mindestens eine Ausnehmung und wenigstens einen zu der Ausnehmung korrespondierenden Vorsprung aufweist, die in axialer Richtung an dem von der Seitenwand wegweisenden Ende des Nabenabschnitts bzw. dem stirnseitigen Ende des Nabenabschnitts angeordnet sind. Die Ausnehmung und der zu der Ausnehmung korrespondierende Vorsprung können dabei als Verbindungselemente zum Verbinden der beiden Spulenhälften dienen.

Dabei ist es weiterhin vorteilhaft, wenn sich, von der Teilungsebene aus betrachtet, die Ausnehmung in Richtung des Nabenabschnitts erstreckt, und der Vorsprung von dem Nabenabschnitt wegweist. Beim Verbinden der beiden Spulenhälften ist es durch die Ausrichtung von Ausnehmung und Vorsprung möglich, dass der Vorsprung einer Spulenhälfte in die Ausnehmung der anderen Spulenhälfte eingreifen kann.

Um ein exaktes Ineinandergreifen von Ausnehmung und Vorspruch sicherzustellen, kann weiterhin vorgesehen sein, dass die wenigstens eine Ausnehmung und der mindestens eine Vorsprung in Umfangsrichtung um den wenigstens einen Nabenabschnitt um 180° zueinander versetzt an dem von der Seitenwand wegweisenden bzw. dem stirnseitigen Ende des Nabenabschnitts angeordnet sind.

In einer bevorzugten Ausgestaltung der erfindungsgemäßen Spule ist die Ausnehmung in der ersten Nabenwand angeordnet, und der Vorsprung durch einen Abschnitt der ersten Nabenwand gebildet. Hierdurch wird sichergestellt, dass auch im Bereich der ineinandergreifenden Ausnehmungen und Vorsprünge eine doppelwandige Ausgestaltung der Nabe erreicht wird.

Alternativ zur Anordnung von Ausnehmungen und Vorsprüngen an der ersten Nabenwand ist es ebenfalls möglich, dass die Ausnehmung in der zweiten Nabenwand angeordnet ist, und dass der Vorsprung durch einen Abschnitt der zweiten Nabenwand gebildet ist. Auch hierdurch wird eine Doppelwandigkeit der Nabe im Bereich der Ausnehmungen und Vorsprünge sichergestellt.

Um die Verbindung zwischen den Spulenhälften zu verbessern, kann in vorteilhafter Weise weiterhin vorgesehen sein, dass der wenigstens eine Nabenabschnitt mehr als eine Ausnehmung und mehr als einen Vorsprung aufweist. So kann jeder der Nabenabschnitte zwei oder mehr Ausnehmungen und hierzu korrespondierende Vorsprünge aufweisen, die, um die Verbindung der beiden Spulenhälften weiter zu verbessern, soweit möglich, symmetrisch angeordnet sein können.

Prinzipiell ist es möglich, die Spulenhälften lösbar oder auch unlösbar miteinander zu verbinden. In dem Fall, dass die beiden eine Spule bildenden Hälften lösbar miteinander verbindbar sind, besteht die Möglichkeit, eine defekte Spulenhälfte gegen eine neue zu ersetzen und/oder einen im Bereich eines doppelwandigen Abschnitts befindlichen Informationsträger, wie einen Transponder in z.B. der Form eines RFID-Etiketts, im Falle beispielsweise eines Defekts, gegen einen neuen Informationsträger auszutauschen. Andererseits besteht für den Fall, dass die beiden eine Spule bildenden Hälften unlösbar miteinander verbindbar sind, nicht die Gefahr, dass sich die Spulenhälften einer Spule unbeabsichtigt voneinander lösen.

In einer vorteilhaften Ausgestaltung der Spule ist vorgesehen, dass an dem zumindest einen Nabenabschnitt Rastelemente vorgesehen sind. Diese können, je nach spezifischer Ausgestaltung, sowohl eine lösbare Verbindung erzeugen, nämlich, wenn sie von außen zugänglich sind, oder eine unlösbare Verbindung bilden, falls die Rastelemente im montierten Zustand nicht zugänglich sind. Die Rastelemente können dabei beliebig gestaltet sein, solange sie ein sicheres Verrasten der Spulenhälften ermöglichen. Beispielsweise können eine Rastnase und eine hierzu korrespondierende Rastnut, in die die Rastnase eingreift, vorgesehen sein, oder zwei ineinandergreifende Rastnasen.

Um eine unlösbare Verbindung der Spulenhälften zu erreichen, ist es weiterhin möglich, alternativ zu Rastelementen, oder zusätzlich hierzu, eine andere Verbindungsmöglichkeit zu verwenden, wie eine Klebe- oder Schweißverbindung.

Um einen formschlüssigen Eingriff der Spule mit der entsprechenden Halterung an der Maschine, an der das Wickelgut verwendet werden soll, wie eine Clipmaschine, zu ermöglichen, kann die Nabe auf ihrer zur Nabenachse weisenden Innenumfangsfläche mit wenigstens einem Drehmomentübertragungselement versehen sein. Selbstverständlich können mehrere Drehmomentübertragungselemente vorgesehen sein, die in gleichmäßiger oder ungleichmäßiger Teilung auf der zur Nabenachse weisenden Innenumfangsfläche der Nabe angeordnet sind.

In einer bevorzugten Ausgestaltung der erfindungsgemäßen Spule kann ein Transponder an der zur Nabenachse weisenden Innenumfangsfläche der Nabe angebracht sein. Der Transponder befindet sich somit zwischen zwei Drehmomentübertragungselementen, und ist durch die in ihrer radialen Ausdehnung höheren Drehmomentübertragungselemente vor Kontakt oder Beschädigung durch die Welle der Maschine geschützt, auf die die erfindungsgemäße Spule zur Verwendung aufgesteckt werden kann.

In einer besonders bevorzugten Ausführung der erfindungsgemäßen Spule ist weiterhin vorgesehen, dass der doppelwandige Abschnitt der Nabe zur Aufnahme eines Transponders ausgestattet ist. Hierdurch wird der wirtschaftliche Nutzen der Spule weiter erhöht, und die Betriebssicherheit verbessert, da der Transponder in dem doppelwandigen Abschnitt der Nabe vor Beschädigungen geschützt ist.

Als Transponder kommen verschiedene Möglichkeiten in Betracht, wobei der Transponder bevorzugt ein RFID-Etikett ist, bei dem die enthaltenen Daten berührungslos ausgelesen werden können, selbst wenn dieser verdeckt, also vor Beschädigung geschützt, angebracht ist.

Weitere vorteilhafte Ausgestaltungen sowie ein Ausführungsbeispiel der Erfindung werden nachstehend im Zusammenhang mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen.

Es zeigen:
- Fig. 1: die perspektivische Ansicht eines Ausführungsbeispiels der erfindungsgemäßen Spule,
- Fig. 2: die perspektivische Ansicht einer Spulenhälfte der Spule entsprechend Fig. 1,
- Fig. 3: eine Draufsicht auf die Spulenhälfte entsprechend der Fig. 2, und
- Fig. 4: eine Schnittdarstellung der Spulenhälfte entsprechend den Figs. 2 und 3, in einer Ebene senkrecht durch die Nabenachse.

Das nachstehend beschriebene Ausführungsbeispiel der erfindungsgemäßen Spule zum Speichern und Abgeben eines auf der Spule aufgewickelten Wickelgutes kommt in einer Clipmaschine, insbesondere einer Wurstclipmaschine, der eingangs genannten Art zum Einsatz.

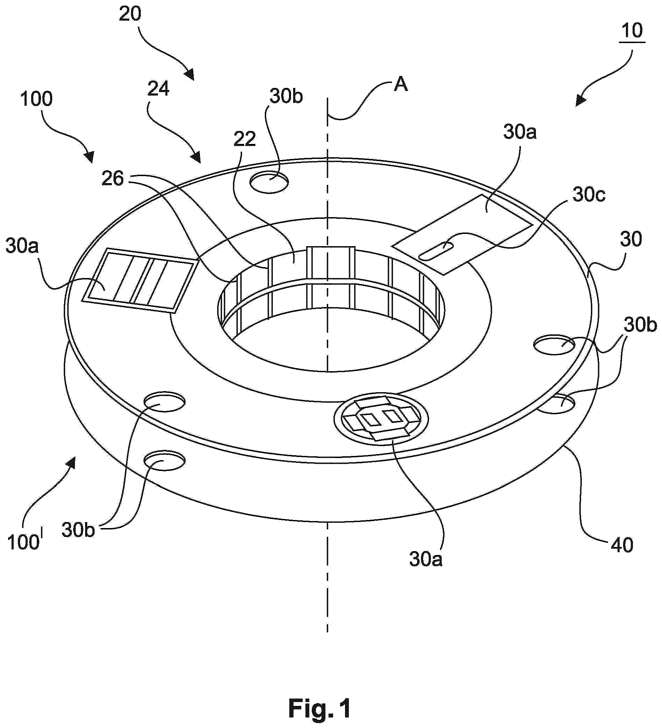

Fig. 1 zeigt ein Ausführungsbeispiel der erfindungsgemäßen Spule 10 mit einer Nabe 20 und an den axialen Stirnenden der Nabe 20 angeordneten Seitenwänden 30, 40. Eine Nabenachse A, die koaxial durch die Nabe 20 verläuft, ist zumindest annähernd senkrecht zu den Seitenwänden 30, 40 ausgerichtet. Die Seitenwände 30, 40 der Spule 10 sind durch kreisringförmige Flächen gebildet, die die seitlichen Begrenzungsflächen des Speicherraums der Spule 10 bilden. Die Außenumfangsoberfläche der Nabe 20 bildet die Begrenzung des Speicherraums der Spule 10 in Richtung der Nabenachse A.

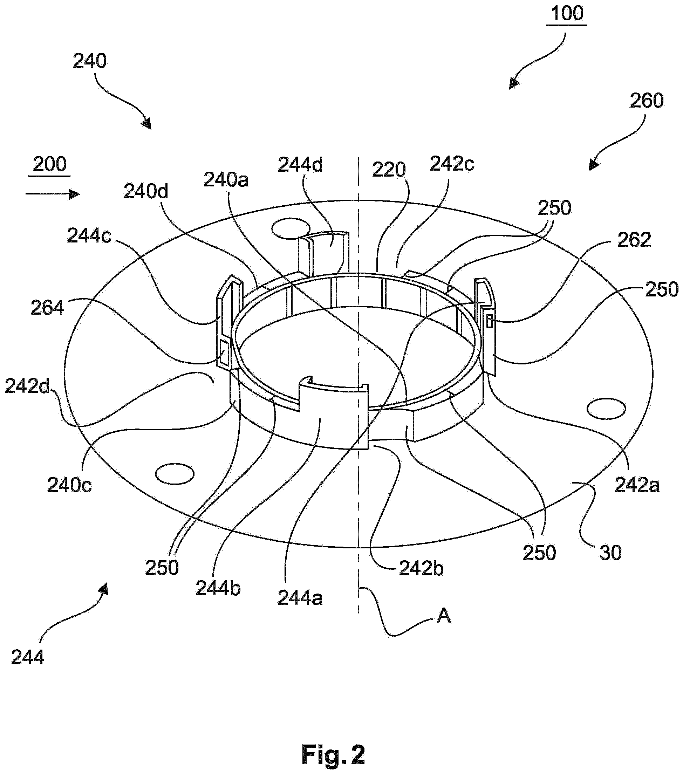

Wie im Weiteren anhand der Figs. 2 bis 4 erläutert wird, ist die Nabe 20 der Spule 10 zumindest abschnittsweise doppelwandig ausgestaltet. Die Nabe 20 weist eine der Nabenachse A nähere, erste Nabenwand 22 und eine der Nabenachse A fernere und von der ersten Nabenwand 22 radial beabstandete zweite Nabenwand 24 auf, von denen in Fig. 1 lediglich die erste Nabenwand 22 sichtbar ist.

Auf der zur Nabenachse A weisenden Innenumfangsoberfläche der Nabe 20 sind Mitnehmer 26 angebracht. Diese Mitnehmer 26 verlaufen in axialer Richtung, also parallel zur Nabenachse A der Spule 10. Sie sind entsprechend Fig. 1 in gleichmäßigen Abständen auf der Nabe 20 verteilt. Die Mitnehmer 26 dienen der formschlüssigen Verbindung der Spule 10 mit einer nicht dargestellten Welle einer Clipmaschine, auf der die Spule 10 im Betrieb befestigt ist. Die Mitnehmer 26 stellen ein kontrolliertes und schlupffreies Drehen der Spule 10 mit der nicht dargestellten Welle sicher. Es ist verständlich, dass die Welle hierzu der Anzahl und Form der Mitnehmer 26 entsprechende Ausnehmungen aufweisen muss. Wie in Fig. 1 zu sehen ist, sind die Mitnehmer 26 zumindest abschnittsweise in gleichen Abständen zueinander auf der zur Nabenachse A weisenden Innenumfangsoberfläche der Nabe 20 angebracht.

Wie ebenfalls in Fig. 1 zu sehen, weisen zumindest eine Außenseite der Seitenwand 30 über den Umfang gleichmäßig verteilte Bereiche 30a auf. Diese, in der vorliegenden Ausführung, drei Bereiche 30a dienen der Kennzeichnung der Spule 10 bzw. des darauf gespeicherten Wickelgutes. Hier können bspw. Angaben über den Hersteller, die Art, Größe oder Verwendung des Wickelgutes untergebracht werden. Die Angaben können bereits während der Herstellung der Spule 10, was in einem Spritzverfahren erfolgen kann, auf dieser aufgebracht werden. Es kann aber auch nach erfolgter Montage und/oder Befüllung der Spule 10 ein Etikett in einem der Bereiche 30a angebracht werden. Dies kann ein für einen Benutzer lesbares oder auch maschinenlesbares Etikett sein, wie ein Strichcode oder ein RFID-Etikett.

Die Seitenwände 30, 40 können Bohrungen 30b oder radial verlaufende Langlöcher 30c aufweisen, die einerseits das Gewicht der Spule 10 reduzieren und andererseits eine Sichtkontrolle des Füllstands der Spule 10 ermöglichen.

Die Spule 10 ist aus zwei identischen Spulenhälften 100, 100' zusammengesetzt, die in einer Teilungsebene E, welche senkrecht zur Nabenachse A ausgerichtet ist, verbunden sind. Da die Spulenhälften 100, 100' identisch aufgebaut sind, wird nachfolgend nur die Spulenhälfte 100 beschrieben.

Fig. 2 zeigt die perspektivische Ansicht der Spulenhälfte 100 der Spule 10 entsprechend Fig. 1.

Die Spulenhälfte 100 umfasst die Seitenwand 30 sowie einen Nabenabschnitt 200 der Nabe 20. Der Nabenabschnitt 200 weist ein erstes Ende auf, mit dem dieser einstückig mit der Seitenwand 30 verbunden ist, sowie ein zweites, von der Seitenwand 30 wegweisendes, stirnseitiges Ende.

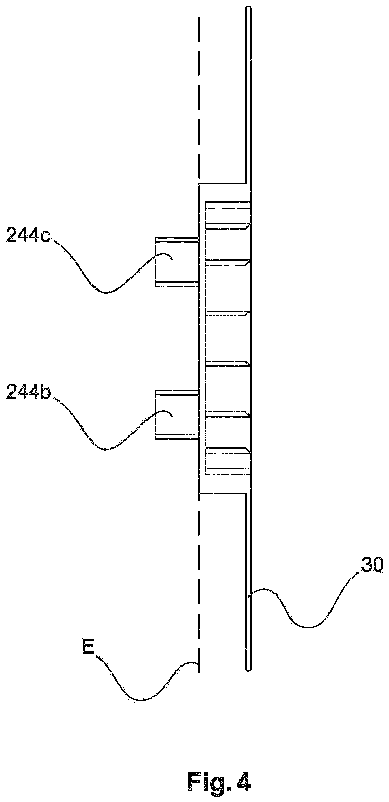

Der Nabenabschnitt 200 umfasst einen zylindrischen Teil 220, der eine Hälfte der zur Nabenachse A weisenden ersten Nabenwand 22 (vgl. Fig.1) der Spule 10 bildet. Der zylindrische Teil 220 hat eine axiale Länge, die zumindest annähernd der Hälfte der axialen Länge der Nabe 20 im zusammengebauten Zustand der Spule 10 entspricht. Die erste Nabenwand 22 der Nabe 20 wird also aus dem zylindrischen Teil 220 der ersten Spulenhälfte 100 und einem entsprechenden zylindrischen Teil 220' der zweiten Spulenhälfte 100' gebildet, die im montierten Zustand der Spule 10 koaxial und so nebeneinander angeordnet sind, dass ihre von den Seitenwänden 30, 40 wegweisenden, stirnseitigen Enden aneinander liegen. Die von den Seitenwänden 30, 40 wegweisenden Enden des zylindrischen Teils 220 der ersten Spulenhälfte 100 und des entsprechenden zylindrischen Teils 220' der zweiten Spulenhälfte 100' markieren die Teilungsebene E der Spule 10 (vgl. Fig. 4).

An der zur Nabenachse A weisenden Innenumfangsoberfläche, der Innenseite des zylindrischen Teils 220 des Nabenabschnitts 200, sind die Mitnehmer 26, genauer gesagt die eine Hälfte jedes Mitnehmers 26, angeordnet.

An der von der Nabenachse A wegweisenden Seite des zylindrischen Teils 220 des Nabenabschnitts 200 sind Abschnitte 240 angeordnet, die einen Teil der ebenfalls zylindrischen zweiten Nabenwand 24 (vgl. Fig.1) der Nabe 20 bilden.

Diese Abschnitte oder Wandabschnitte 240 verlaufen konzentrisch zum zylindrischen Teil 220 und sind radial zu diesem beabstandet. Die Wandabschnitte 240 haben eine Höhe bzw. axiale Länge, die der Höhe bzw. der axialen Länge des zylindrischen Teils 220 entspricht, und erstrecken sich von der gleichen Seite der Seitenwand 30 wie der zylindrische Teil 220, sodass sich zwischen den Wandabschnitten 240 und dem zylindrischen Teil 220 zumindest abschnittsweise ein annähernd ringförmiger Raum bildet. Zwischen den Wandabschnitten 240, in Besonderen an den Endbereichen sowie in gleichmäßigen Abständen dazwischen, sind Stege 250 angeordnet und zumindest annähernd radial ausgerichtet. Die Stege 250 erstrecken sich über die gesamte radiale Höhe des annähernd ringförmigen Raums zwischen dem zylindrischen Teil 220 und den Wandabschnitten 240, also zwischen den zueinander weisenden Flächen des zylindrischen Teils 220 und der Abschnitte 240.

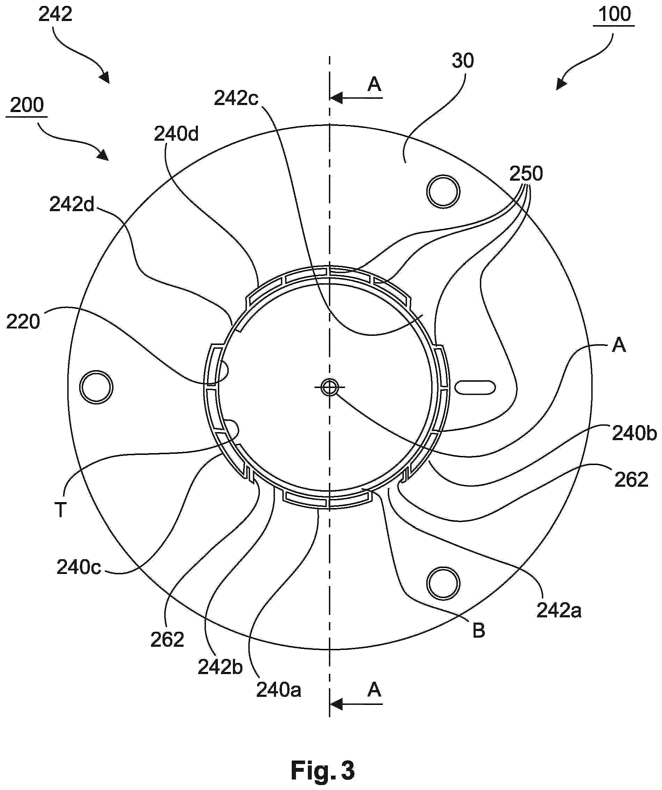

Entsprechend der Ausführung der Spulenhälfte 100 nach Figs. 2 und 3, weist diese vier Wandabschnitte 240 auf. Ein erster Abschnitt 240a ist in Fig. 2 rechts unten zu sehen. Dieser Wandabschnitt 240a ist mittels drei Stegen 250 an dem zylindrischen Teil 220 abgestützt, mit je einem Steg 250 an seinen Enden sowie einem weiteren Steg 250 mittig zwischen des Enden. Hierdurch bilden sich zwei spiegelbildlich identische Kammern.

In Umfangsrichtung versetzt zu beiden Seiten des ersten Abschnitts 240a sind ein zweiter Wandabschnitt 240b und ein dritter Wandabschnitt 240c angeordnet, die in Umfangsrichtung gesehen etwa ein Drittel länger sind als der erste Wandabschnitt 240a. Jeder der zweiten und dritten Wandabschnitte 240b, 240c weist je einen Steg 250 in seinen Endbereichen sowie zwei weitere, zwischen den Enden in vorzugsweise gleichen Abständen angeordnete Stege 250 auf. Hierdurch wird der teilkreisförmige Raum zwischen den Wandabschnitten 240b, 240c und dem zylindrischen Teil 220 jeweils in drei annähernd gleichgroße Kammern gegliedert.

Weiter in Umfangsrichtung und um annähernd 180° versetzt zum ersten Wandabschnitt 240a ist ein vierter Wandabschnitt 240d angeordnet, der etwa die doppelte Länge des ersten Wandabschnitts 240a besitzt. Er ist mittels fünf Stegen 250 gegen den zylindrischen Teil 220 abgestützt, mit je einem Steg 250 an seinen Enden und drei weiteren Stegen 250, die vorzugsweise gleichmäßig zwischen den Enden verteilt angeordnet sind. Hierdurch werden vier annähernd gleiche Kammern gebildet.

Zwischen den Wandabschnitten 240a, 240b, 240c und 240d sind jeweils Ausnehmungen 242 dadurch geschaffen, dass hier die jeweils zueinander weisenden Enden der Wandabschnitte 240a, 240b, 240c und 240d zueinander beabstandet sind. Damit ist jeweils eine erste Ausnehmung 242a und eine zweite Ausnehmung 242b zwischen dem ersten Wandabschnitt 240a und dem zweiten Wandabschnitt 240b bzw. dem dritten Wandanschnitt 240c gebildet, sowie jeweils eine dritte Ausnehmung 242c und eine vierte Ausnehmung 242d zwischen dem vierten Wandabschnitt 240d und dem zweiten Wandabschnitt 240b bzw. dem dritten Wandanschnitt 240c. Der jeweilige Abstand zwischen den Wandabschnitten 240a, 240b, 240c und 240d, und damit die jeweilige Breite der entsprechenden Ausnehmung 242, stimmt mit der Breite der entsprechend um 180° in Umfangsrichtung versetzten, also gegenüberliegenden Kammern bzw. des Teils des Wandabschnitts 240a, 240b, 240c und 240d, der die jeweilige Kammer bildet, überein. Die Ausnehmungen 242 sind somit in Umfangsrichtung von den Stegen 250 der angrenzenden Wandabschnitte 240a, 240b, 240c und 240d begrenzt, die an deren jeweiligen Enden angeordnet sind, und erstrecken sich in axialer Richtung zwischen der Seitenwand 30 und dem von der Seitenwand 30 wegweisende Ende des zylindrischen Teils 220, welches die Teilungsebene E markiert.

Jede der Ausnehmungen 242 ist, um 180° in Umfangsrichtung versetzt, also gegenüberliegend, ein Vorsprung 244 zugeordnet. Jeder der Vorsprünge 244 ist durch eine Verlängerung des Teils des Wandabschnitts 240a, 240b, 240c und 240d gebildet, der die der jeweiligen Ausnehmung 242 gegenüberliegende Kammer bildet. Das heißt, die Breite des jeweiligen Vorsprungs 244 entspricht somit der Breite der jeweils um 180° versetzten, gegenüberliegenden Ausnehmung 242, zumindest im Bereich der die zweiten Nabenwand 24 bildenden Wandabschnitte 240. Die Höhe der Vorsprünge 244, also deren axiale Länge, entspricht der Höhe bzw. axialen Länge der Ausnehmungen 242. Im Ausführungsbeispiel nach den Figs. 2 bis 4 bedeutet dies, da die axiale Länge der Ausnehmungen 242 der axialen Länge des zylindrischen Teils 220 des Nabenabschnitts 200 entspricht, haben auch die Vorsprünge 244 die gleiche axiale Länge wie der zylindrische Teil 220 der Nabe 200. Die Vorsprünge 244 und Ausnehmungen 242 können auch jede beliebige Höhe haben, die geringer ist als die Höhe des zylindrischen Teils 220 der Nabe 200. Wesentlich ist aber, dass die Ausnehmungen 242 und die Vorsprünge 244 die gleiche Höhe aufweisen.

Dies bedeutet, dass an dem ersten Wandabschnitt 242a kein Vorsprung 244 angeordnet ist, jedoch jeweils ein erster und ein zweiter Vorsprung 244a, 244b an den zweiten und dritten Abschnitten 240b, 240c, hier im Bereich des jeweils zum ersten Wandabschnitt 240a weisenden Endes bzw. der zum ersten Wandabschnitt 240a weisenden Kammer der ersten und zweiten Wandabschnitte 240b, 240c, und ein dritter sowie ein vierter Vorsprung 244c, 244d, hier jeweils an jedem Ende des vierten Abschnitts 240d. Mit anderen Worten, den Ausnehmungen 242a, 242b liegen die Vorsprünge 244c, 244d des vierten Wandabschnitts 240d gegenüber, und den Ausnehmungen 242c, 242d liegen die Vorsprünge 244a, 244b der zweiten und dritten Wandabschnitte 240b, 240c gegenüber.

Wie weiterhin aus Fig. 2 hervorgeht, sind die Stege 250, die unmittelbar rechts und links an die Vorsprünge 244a, 244b angrenzen, so ausgestaltet, dass sie sich über die gesamte axiale Länge des ersten und zweiten Wandabschnitts 240a, 240b und die gesamte axiale Länge der Vorsprünge 244a, 244b erstrecken. Hierbei bilden diese Stege 250 die seitlichen Begrenzungen der Vorsprünge 244a, 244b. Am Wandabschnitt 240d sind lediglich die, vom Ende des Wandabschnitts 240d aus gesehen, zweiten Stege 250 über die axiale Länge des Wandabschnitts 244d hinaus um die axiale Länge der Vorsprünge 244c, 244d verlängert, und bilden so den Abschluss der zueinander weisenden Seitenkanten der Vorsprünge 244c, 244d. Diese verlängerten Stege 250 dienen der Stabilisierung der Vorsprünge 244, die so im montierten Zustand der Spule 10 durch die Stege 250 gegen den zylindrischen Teil 220 der Nabe 20 abgestützt werden.

Fig. 2 zeigt weiterhin, dass im Bereich der Ausnehmungen 242 und Vorsprünge 244 Rastelementepaare 260 vorgesehen sind, die ein Verbinden der beiden Spulenhälften 100, 100' ermöglichen. Jedes der Rastelementepaare 260 weist eine Rastnase 262 und eine Rastnut 264 auf, wobei die Rastnase 262 einer der beiden Spulenhälften 100, 100' im montierten Zustand der Spule 10 in die Rastnut 264 der jeweils anderen Spulenhälfte 100', 100 eingreifen kann.

Eine erste Rastnase 262 ist im Bereich des Vorsprungs 244a, an dem zum ersten Wandabschnitt 240a weisenden Steg 250 angeordnet. Eine weitere Rastnase ist (in Fig. 2 nicht sichtbar) im Bereich des zweiten Vorsprungs 244b ebenfalls an dem zum ersten Wandabschnitt 240a weisenden Steg 250 angeordnet. Desweiteren ist eine erste Rastnut 264 an dem zur vierten Ausnehmung 242d weisenden Steg 250 des vierten Wandabschnitts 240d, und eine weitere Rastnut (ebenfalls nicht sichtbar in Fig. 2) an dem zur dritten Ausnehmung 242c weisenden Steg 250 des vierten Wandabschnitts 240d angeordnet.

Die Spulenhälften 100, 100' sind, wie bereits erwähnt, völlig identisch. Da es sich um Kunststoffelemente handelt, können diese in einem Spritz- bzw. Gießverfahren hergestellt werden, wobei lediglich eine einzige Form benötigt wird, um beide Spulenhälften 100, 100' herzustellen.

Fig. 3 ist eine Draufsicht der Spulenhälfte 100 aus Fig. 2, genauer, eine Draufsicht auf die Teilungsebene E der Spulenhälfte 100.

Aus dieser Darstellung wird die spezifische Ausgestaltung der Nabe 20 deutlich. Zu sehen ist hier der zylindrische Teil 220 des Nabenabschnitts 200, sowie die hierzu in radialer Richtung nach außen beabstandet angeordneten Wandabschnitte 240a, 240b, 240c, 240d sowie die zwischen den Wandabschnitten 240a, 240b, 240c, 240d entsprechend angeordneten Ausnehmungen 242a, 242b, 242c, 242d. Weiterhin sind die Rastnasen 262 der Rastelementepaare 260 zu sehen, die aus der Oberfläche der Stege 250, welche zu dem ersten Wandabschnitt 240a weisen, hervortreten.

Zu erkennen ist in Fig. 3 ebenfalls, dass die Stege 250, die einem Wandelement 240 zugeordnet sind, parallel zueinander und in Richtung der Nabenachse A ausgerichtet sind. Lediglich die beiden Stege 250, die vom Ende des zweiten und dritten Wandabschnitts 240b, 240c zum ersten Wandabschnitt 240a weisen, sind um ca. 90° gegenüber den restlichen Stegen 250 der Wandabschnitte 240b, 240c gedreht. Hieraus ergibt sich, dass die dritten und vierten Ausnehmungen 242c, 242d, in Umfangsrichtung gesehen, rechtwinklig zueinander ausgerichtete Begrenzungsflächen aufweisen, wie auch die hierzu korrespondierenden ersten und zweiten Vorsprünge 244a, 244b, wogegen die ersten und zweiten Ausnehmungen 242a, 242b, in Umfangsrichtung gesehen, parallel zueinander ausgerichtete Begrenzungsflächen aufweisen, wie auch die hierzu korrespondierenden dritten und vierten Vorsprünge 244c, 244d. Durch diese spezifische Gestaltung wird sichergestellt, dass die einander gegenüberliegenden Ausnehmungen 242 und Vorsprünge 244, in der Teilungsebene E gesehen, identische Querschnitte aufweisen, bei der Montage der Spule 10 also problemlos mit den korrespondierenden Vorsprüngen 244' und Ausnehmungen 242' der zweiten Spulenhälfte 100' in Eingriff kommen.

In Fig. 3 ist weiterhin ein Bereich T zu sehen, in dem keine Mitnehmer 26 an der der zur Nabenachse A weisenden Innenumfangsoberfläche des zylindrischen Teils des Nabenabschnitts 200 angeordnet sind. Ein ebenfalls in Fig. 3 zu sehender Bord B der sich vom stirnseitigen Ende des zylindrischen Teils 220 in Richtung der Nabenachse A erstreckt hat eine radiale Ausdehnung, die der radialen Ausdehnung der Mitnehmer 26 (in Fig. 3 nicht zu sehen) entspricht. Der Bord B erstreckt sich dabei nicht über den Bereich T.

Fig. 4 ist eine Schnittdarstellung einer Spulenhälfte 100 entsprechend den Figs. 2 und 3, entlang der Schnittlinie AA in Fig. 3, in einer Ebene durch die Nabenachse A. Die Blickrichtung liegt in der Teilungsebene E, die den in Fig. 4 linken Rand des Nabenanschnitts 200 bildet, also dessen von der Seitenwand 30 wegweisendes Ende.

Wie aus Fig. 4 ersichtlich, erstrecken sich die Vorsprünge 244, von denen in Fig. 4 lediglich die dritten und vierten Vorsprünge 244c, 244d zu sehen sind, von der Teilungsebene E nach links, also von dem Nabenabschnitt 200 weg, wohingegen sich die Ausnehmungen 242 von der Teilungsebene E aus in den Nabenabschnitt 200 hinein erstrecken (siehe Fig. 2).

Zur Herstellung einer erfindungsgemäßen Spule 10 werden zunächst wenigstens zwei Spulenhälften 100, 100' in der einen gleichen oder in identischen Formen, bspw. durch einen Spritzvorgang, hergestellt. Die beiden Spulenhälften 100, 100' werden anschließend, nachdem diese erkaltet sind, mit den von den Seitenwänden 30, 40 wegweisenden Enden der Nabenabschnitte 200 koaxial zueinander positioniert und um 180° um die Nabenachse A gegeneinander verdreht. Hierdurch werden die Ausnehmungen 242 und Vorsprünge 244 in der zueinander korrespondierenden Anordnung positioniert. Anschließend werden die Spulenhälften 100, 100' axial aufeinander zu bewegt. Dabei greifen die Vorsprünge 244 in die entsprechenden Ausnehmungen 242 ein. Stoßen die von dem Nabenabschnitt 200 wegweisenden Kanten der Vorsprünge 244 einer der beiden Spulenhälften 100, 100' gegen die Seitenwand 30, 40 der entsprechend anderen Spulenhälfte 100', 100, greifen die Rastnasen 262 der Rastelementepaare 260 in die korrespondierenden Rastnuten 264 ein und bilden die Verbindung der Spulenhälften 100, 100'. Weiterhin bilden die Vorsprünge 244 die fehlenden Teile der zweiten Nabenwand 24, wodurch eine durchgehende Doppelwandigkeit der Nabe 20 der Spule 10 erreicht wird.

In dem Ausführungsbeispiel entsprechend den Figs. 2 und 3 sind die Rastelemente 262, 264 so angeordnet, dass sie im monierten Zustand der Spule 10 nicht mehr zugänglich sind, und so eine unlösbare, d.h. eine nicht zerstörungsfrei lösbare Verbindung bilden.

Es kann selbstverständlich vorgesehen sein, dass die Rastelemente 262, 264 der Rastelementepaare 260 so angeordnet sind, dass sie im montierten Zustand der Spule 10 zugänglich und somit lösbar sind.

Eine unlösbare Verbindung der Spulenhälften 100, 100' kann aber auch auf andere Weise als durch Rastelemente 262, 264 erreicht werden, bspw. durch einen Schweiß- oder Klebevorgang.

In dem von Mitnehmern 26 freie Bereich T an der der zur Nabenachse A weisenden Innenumfangsoberfläche des Nabenabschnitts 200 kann ein Transponder, wie ein RFID-Etikett, angebracht werden. Da die Spule 10 mit den Mitnehmern 26 bzw. dem Bord B auf der Oberfläche der Welle der Maschine aufliegt, auf der die erfindungsgemäße Spule zur Verwendung aufgesteckt werden kann, wie einer Clipmaschine, kommt der Transponder nicht mit dieser Welle in Kontakt, und ist so vor Beschädigung geschützt. Zudem hat der Transponder hier den größtmöglichen Abstand zum auf der Spule gespeicherten Wickelgut, und somit den größtmöglichen dielektrischen Abstand.

Die Doppelwandigkeit der Nabe 20 der erfindungsgemäßen Spule 10, sowie die Tatsache, dass die durch die doppelwandige Nabe 20 gebildeten Kammern vor der Montage der Spule 10 zugänglich sind, erlauben alternativ zur Anbringung des Transponders an der zur Nabenachse A weisenden Innenumfangsoberfläche des Nabenabschnitts 200, das Unterbringen eines Transponders in jeder der Kammern der doppelwandigen Nabe 20 der Spule 10, der so effektiv vor Beschädigungen oder Manipulation geschützt ist. Ist die Verbindung der Spulenhälften 100, 100' lösbar, besteht darüberhinaus die Möglichkeit den Transponder im Fall eines Defekts auszutauschen.

Die anhand des Ausführungsbeispiels beschriebene Spule 10 weist vier Vorsprünge 244 und vier hierzu korrespondierende Ausnehmungen 242 auf. Um eine Spule 10 in der erfindungsgemäßen Weise zu gestalten, können andere Anzahlen an Ausnehmungen 242 und Vorsprüngen 244 gewählt werden, wobei die Anzahl der Ausnehmungen 242 und die Anzahl der Vorsprünge 244 übereinstimmen sollte. Zumindest muss aber zu jedem Vorsprung 244 wenigstens eine korrespondierende Ausnehmung 242 vorgesehen sein. So genügen bereits je eine Ausnehmung 242 und ein Vorsprung 244 je Spulenhälfte 100, 100', wobei Vorsprung und Ausnehmung einer Spulenhälfte 100, 100' in Umfangsrichtung um 180° versetzt sein müssen.

Weiterhin ist entsprechend dem Ausführungsbeispiel der Figs. 2 und 3 die Teilungsebene E zur Bildung zweier identische Spulenhälften 100, 100' so gelegt, dass sie senkrecht zur Nabenachse A und parallel zwischen den Seitenwänden 30, 40 der Spule 10 verläuft. Selbstverständlich kann die Teilungsebene E auch in einem anderen Winkel zur Nabenachse A verlaufen, solange gewährleistet ist, dass die beiden entstehenden Spulenhälften zueinander identisch sind. Beispielsweise kann die Teilungsebene E durch die Nabenachse A verlaufen. Hierdurch entstehen zwei identische Nabenhälften, die eine halbkreisförmige Gestalt haben.

## Patentansprüche

1. Spule (10) zum Speichern und Abgeben eines auf der Spule (10) aufgewickelten Wickelgutes, insbesondere eines Clipstrangs, wobei die Spule (10) eine Nabe (20) mit einer Nabenachse (A) und jeweils an den axialen Stirnenden der Nabe (20) angeordnete Seitenwände (30, 40) aufweist, die über die Außenumfangsoberfläche der Nabe (20) in zumindest annähernd radialer Richtung überstehen, wobei der von den zueinander weisenden Flächen der Seitenwände (30, 40) und der Außenumfangsoberfläche der Nabe (20) definierte und um die Nabe (20) umlaufende Speicherraum zur Aufnahme des Wickelgutes dient, wobei die Nabe (20) zumindest abschnittsweise doppelwandig ausgestaltet ist, mit einer ersten Nabenwand (22, 24), und mit einer zur ersten Nabenwand (22) radial beabstandeten zweiten Nabenwand (24), und wobei
die Spule (10) aus zwei Spulenhälften (100, 100') gebildet ist, die identisch gestaltet sind,
**dadurch gekennzeichnet, dass** jede der Spulenhälften (100, 100') wenigstens einen Nabenabschnitt (200) aufweist, der abschnittsweise doppelwandig ausgestaltet ist,
dass der wenigstens eine Nabenabschnitt (200) mindestens eine Ausnehmung (242) und wenigstens einen zu der Ausnehmung (242) korrespondierenden Vorsprung (244) aufweist, die in axialer Richtung an dem von der Seitenwand (30, 40) wegweisenden Ende des Nabenabschnitts (200) angeordnet sind, und
dass die Ausnehmung (242) in der ersten Nabenwand (22) angeordnet ist, und der Vorsprung (244) durch einen Abschnitt der ersten Nabenwand (22) gebildet ist, oder
dass die Ausnehmung (242) in der zweiten Nabenwand (24) angeordnet ist, und der Vorsprung (244) durch einen Abschnitt der zweiten Nabenwand (24) gebildet ist.

2. Spule nach Anspruch 1,
**dadurch gekennzeichnet, dass** die beiden Spulenhälften (100, 100') zur Bildung der Spule (10) in einer Teilungsebene (E) miteinander verbindbar sind, die senkrecht zur Nabenachse (A) ausgerichtet ist.

3. Spule nach Anspruch 1,
**dadurch gekennzeichnet, dass** die beiden Spulenhälften (100, 100') zur Bildung der Spule (10) in einer Teilungsebene (E) miteinander verbindbar sind, die durch die Nabenachse (A) verläuft.

4. Spule nach Anspruch 1,
**dadurch gekennzeichnet, dass**, von der Teilungsebene (E) aus betrachtet, sich die Ausnehmung (242) in Richtung des Nabenabschnitts (200) erstreckt, und dass der Vorsprung (244) von dem Nabenabschnitt (200) wegweist.

5. Spule nach Anspruch 1 oder 4,
**dadurch gekennzeichnet, dass** die wenigstens eine Ausnehmung (242) und der mindestens eine Vorsprung (244) in Umfangsrichtung um den wenigstens einen Nabenabschnitt (200) um 180° zueinander versetzt an dem von der Seitenwand (30,40) wegweisenden Ende des Nabenabschnitts (200) angeordnet sind.

6. Spule nach den Ansprüchen 1 bis 5,
**dadurch gekennzeichnet, dass** der wenigstens eine Nabenabschnitt (200) mehr als eine Ausnehmung (242) und mehr als einen Vorsprung (244) aufweist.

7. Spule nach den Ansprüchen 1 bis 6,
**dadurch gekennzeichnet, dass** die beiden die Spule (10) bildenden Hälften (100, 100') lösbar miteinander verbindbar sind.

8. Spule nach den Ansprüchen 1 bis 6,
**dadurch gekennzeichnet, dass** die beiden die Spule (10) bildenden Hälften (100, 100') unlösbar miteinander verbindbar sind.

9. Spule nach den Ansprüchen 1 bis 8,
**dadurch gekennzeichnet, dass** an dem zumindest einen Nabenabschnitt (200) Rastelemente (260) vorgesehen sind.

10. Spule nach einem der Ansprüche 1 bis 9,
**dadurch gekennzeichnet, dass** die Nabe (20) auf ihrer zur Nabenachse (A) weisenden Innenumfangsfläche mit wenigstens einem Drehmomentübertragungselement (26) versehen ist.

11. Spule nach einem der Ansprüche 1 bis 10,
**dadurch gekennzeichnet, dass** an der zur Nabenachse (A) weisenden Innenumfangsfläche der Nabe (20) ein Transponder anbringbar ist.

12. Spule nach einem der Ansprüche 1 bis 10,
**dadurch gekennzeichnet, dass** der doppelwandige Abschnitt der Nabe (20) zur Aufnahme eines Transponders ausgestattet ist.

13. Spule nach Anspruch 11 oder 12,
**dadurch gekennzeichnet, dass** der Transponder ein RFID-Etikett ist.

## Claims

1. A reel (10) for storing and dispensing of winding material wound on the reel (10), particularly a clip line, the reel (10) comprising a hub (20) having a hub axis (A) and side walls (30, 40) each disposed at the axial end faces of the hub (20) and protruding past the outer circumferential surface of the hub (20) in an approximately radial direction, the storage space defined by the surfaces of the side walls (30, 40) facing toward each other and the outer circumferential surface of the hub (20) and surrounding the hub (20) serving for receiving the winding material, wherein the hub (20) being at least in sections double-walled in design, having a first hub wall (22, 24) and having a second hub wall (24) spaced radially apart from the first hub wall (22),
and wherein
the reel (10) is formed from two reel halves (100, 100') which are identical in design,
**characterized in that** each of the reel halves (100, 100') comprises at least one hub segment (200) at least in sections double-walled in design,
that the at least one hub segment (200) comprises at least one recess (242) and at least one protrusion (244) corresponding to the recess (242) disposed on the end of hub segment (200) facing away from the side wall (30, 40) in the axial direction, and
that the recess (242) is disposed in the first hub wall (22) and the protrusion (244) is formed by a segment of the first hub wall (22), or
that the recess (242) is disposed in the second hub wall (24) and the protrusion (244) is formed by a segment of the second hub wall (24).

2. The reel according to claim 1,
**characterized in that** the two reel halves (100, 100') can be connected to each other in a dividing plane (E) aligned perpendicular to the hub axis (A) for forming the reel (10).

3. The reel according to claim 1,
**characterized in that** the two reel halves (100, 100') can be connected to each other in a dividing plane (E) running through the hub axis (A) for forming the reel (10).

4. The reel according to claim 1,
**characterized in that** the recess (242) extends in the direction of the hub segment (200) as seen from the dividing plane (E) and that the protrusion (244) faces away from the hub segment (200).

5. The reel according to claim 1 or 4,
**characterized in that** the at least one recess (242) and the at least one protrusion (244) are disposed offset from each other by 180° in the circumferential direction about the at least one hub segment (200) on the end of the hub segment (200) facing away from the side wall (30, 40).

6. The reel according to any of claims 1 to 5,
**characterized in that** the at least one hub segment (200) comprises more than one recess (242) and more than one protrusion (244).

7. The reel according to any of claims 1 to 6,
**characterized in that** the two halves (100, 100') forming the reel (10) can be releasably connected to each other.

8. The reel according to any of claims 1 to 6,
**characterized in that** the two halves (100, 100') forming the reel (10) can be permanently connected to each other.

9. The reel according to any of claims 1 to 8,
**characterized in that** latching elements (260) are provided on the at least one hub segment (200).

10. The reel according to any of claims 1 to 9,
**characterized in that** the hub (20) has at least on torque transfer element (26) on the inner circumferential surface thereof facing toward the hub axis (A).

11. The reel according to any of claims 1 to 10,
**characterized in that** a transponder can be applied to the inner circumferential surface of the hub (20) facing toward the hub axis (A).

12. The reel according to any of claims 1 to 10,
**characterized in that** the double-wall segment of the hub (20) is designed for receiving a transponder.

13. The reel according to claim 11 or 12,
**characterized in that** the transponder is an RFID label.

## Revendications

1. Bobine (10) pour l'enroulement et le déroulement d'un matériau à enrouler enroulé sur la bobine (10), en particulier d'un fil à clip, la bobine (10) présentant un moyeu (20) avec un axe de moyeu (A) et des parois latérales (30, 40) respectivement disposées aux extrémités frontales axiales du moyeu (20), lesquelles parois font saillie par rapport à la surface périmétrique externe du moyeu (20) selon une direction au moins approximativement radiale, dans laquelle l'espace de stockage tournant autour du moyeu (20) et défini par les surfaces dirigées l'une vers l'autre des parois latérales (30, 40) et la surface périmétrique externe du moyeu (20) sert à accueillir le matériau à enrouler, dans laquelle le moyeu (20) est, au moins par sections, exécuté à double paroi, avec une première paroi de moyeu (22, 24), et avec une deuxième paroi de moyeu (24) écartée radialement de la première paroi de moyeu (22), et dans laquelle
la bobine (10) est constituée par deux moitiés de bobine (100, 100'), de constitution identique,
**caractérisée en ce que** chacune des moitiés de bobine (100, 100') présente au moins une section de moyeu (200), aménagée au moins par sections à double paroi,
**en ce que** l'au moins une section de moyeu (200) présente au moins une cavité (242) et au moins une saillie (244) correspondant à la cavité (242), disposées dans le sens axial sur l'extrémité de la section de moyeu (200) écartée de la paroi latérale (30, 40), et
**en ce que** la cavité (242) est disposée dans la première paroi de moyeu (22), et la saillie (244) est constituée par une section de la première paroi de moyeu (22), ou
**en ce que** la cavité (242) est disposée dans la deuxième paroi de moyeu (24), et la saillie (244) est constituée par une section de la deuxième paroi de moyeu (24).

2. Bobine selon la revendication 1, **caractérisée en ce que** les deux moitiés de bobine (100, 100') peuvent être reliées l'une à l'autre dans un plan de division (E) disposé perpendiculairement à l'axe de moyeu (A) afin de constituer la bobine (10).

3. Bobine selon la revendication 1, **caractérisée en ce que** les deux moitiés de bobine (100, 100') peuvent être reliées l'une à l'autre dans un plan de division (E) s'étendant à travers l'axe de moyeu (A) afin de constituer la bobine (10).

4. Bobine selon la revendication 1, **caractérisée en ce que**, observée au départ du plan de division (E), la cavité (242) s'étend en direction de la section de moyeu (200), et **en ce que** la saillie (244) est écartée de la section de moyeu (200).

5. Bobine selon la revendication 1 ou 4, **caractérisée en ce que** l'au moins une cavité (242) et l'au moins une saillie (244) sont disposées dans le sens périmétrique autour de l'au moins une section de moyeu (200) en décalage de 180° l'une par rapport à l'autre sur l'extrémité de la section de moyeu (200) écartée de la paroi latérale (30, 40).

6. Bobine selon les revendications 1 à 5, **caractérisée en ce que** l'au moins une section de moyeu (200) présente plus d'une cavité (242) et plus d'une saillie (244).

7. Bobine selon les revendications 1 à 6, **caractérisée en ce que** les deux moitiés (100, 100') constituant la bobine (10) peuvent être reliées l'une à l'autre de façon amovible.

8. Bobine selon les revendications 1 à 6, **caractérisée en ce que** les deux moitiés (100, 100') constituant la bobine (10) peuvent être reliées l'une à l'autre de façon inamovible.

9. Bobine selon les revendications 1 à 8, **caractérisée en ce que** des éléments d'encliquetage (260) sont prévus sur au moins une section de moyeu (200).

10. Bobine selon l'une des revendications 1 à 9, **caractérisée en ce que** le moyeu (20) est doté d'au moins un élément de transmission de couple (26) sur sa surface périmétrique interne dirigée vers l'axe de moyeu (A).

11. Bobine selon l'une des revendications 1 à 10, **caractérisée en ce qu'**un transpondeur peut être installé sur la surface périmétrique interne du moyeu (20) dirigée vers l'axe de moyeu (A).

12. Bobine selon l'une des revendications 1 à 10, **caractérisée en ce que** la section à double paroi du moyeu (20) est aménagée afin d'accueillir un transpondeur.

13. Bobine selon la revendication 11 ou 12, **caractérisée en ce que** le transpondeur est une étiquette RFID.
